# EUROPÄISCHE PATENTSCHRIFT

(11) **EP 2 129 937 B1**
(45) Veröffentlichungstag und Bekanntmachung des Hinweises auf die Patenterteilung: **14.08.2013**
(21) Anmeldenummer: 08707838.2
(22) Anmeldetag: 08.01.2008
(51) Int. Cl.: F16H 55/17, F16H 55/06

(54) **ZWEIKOMPONENTIGES ZAHNRAD**
TWO-COMPONENT GEAR WHEEL
ROUE DENTEE A DEUX COMPOSANTS

(30) Priorität: 27.02.2007 DE 102007009564
(43) Veröffentlichungstag der Anmeldung: 09.12.2009
(73) Patentinhaber: Robert Bosch GmbH, 70442 Stuttgart (DE)
(72) Erfinder: HAWIGHORST, Achim, 77830 Buehlertal (DE)
(86) Internationale Anmeldenummer: PCT/EP2008/050143
(87) Internationale Veröffentlichungsnummer: WO 2008/104410

(56) Entgegenhaltungen:
- EP-A- 0 074 241
- DE-A1- 19 953 869
- GB-A- 2 057 625
- GB-A- 2 086 528

## Beschreibung

Die Erfindung betrifft ein zweikomponentiges Zahnrad, das aus Teilen aus mindestens zwei unterschiedlichen Materialien zusammengesetzt ist. Derartige Zahnräder sind insbesondere für den Einsatz in Wischerantrieben von Kraftfahrzeugen geeignet.

### Stand der Technik

Zahnräder bilden wichtige Getriebekomponenten und unterliegen extrem unterschiedlichen Anforderungen. In der Regel ist neben einer ausreichenden Stabilität des Zahnkranzes auf eine ausreichende Flächensteifigkeit des Radkörpers zu achten. In anderen Konfigurationen werden dagegen keine besonderen Anforderungen an eine erhöhte Flächensteifigkeit gestellt, wogegen Aspekte des Verschleißes im Bereich der Zahnflanken und der Befestigung und/oder Führung des Zahnrades an Achsen oder Wellen limitierende Faktoren darstellen. Dies ist insbesondere bei Getriebeformen der Fall, bei denen eine erhöhte Reibungsbelastung zwischen in Kontakt gelangenden Flächen formschlüssig ineinander greifender beweglicher Getriebeelemente auftritt, wie das beispielsweise bei Schneckengetrieben, insbesondere in Wischerantrieben, der Fall ist.

Es ist bekannt, Zahnräder aus masslvem Kunststoff, aus masslvem Metall, aus Sintermetall oder aus Metall mit andersartigen Beschichtungen herzustellen, Zahnräder aus massivem Metall oder Sintermetall genügen zwar hohen Festigkeitsanforderungen, weisen als Nachteile jedoch relativ hohe Materialkosten und ein hohes Eigengewicht auf. Bei Zahnrädern aus masslvem Kunststoff stellt die Abriebfestigkeit im Bereich der Zahnflanken häufig einen beschränkenden Faktor dar. Dazu kommt eine erhöhte thermische Empfindlichkeit, die im Falle plötzlich auftretender thermischer Überlastungen zu irreversiblen Deformationen bzw. zur Zerstörung derartiger Zahnräder führen kann.

Aus der EP 0 074 241 A1 ist ferner ein zweikomponentiges Zahnrad nach dem Oberbegriff des Anspruchs 1 bekannt, das ein metallisches Formteil bestehend aus einem Zahnkranz mit Außenverzahnung und mindestens einem Stützelement umfasst, wobei das Stützelement auf der Innenseite des Zahnkranzes mit dem Zahnkranz verbunden ist. Weiterhin umfasst das Zahnrad eine Künststofffüllung, welche sich mit der Innenseite des Zahnkranzes zumindest teilweise in flächigem Kontakt befindet.

### Vorteile der Erfindung

Die Erfindung betrifft ein zweikomponentiges Zahnrad nach dem Oberbegriff des Anspruchs 1. Um in vorteilhafter Weise eine formschlüssige Verbindung zwischen den beiden Komponenten zu bewirken, ist die Kunststofffüllung als ein Kunststoffformteil ausgebildet, das in von einer das Zahnrad aufnehmenden Welle oder Achse beabstandeten Bereichen mit dem metallischen Formteil derart verbunden ist, dass Bolzen auf dem Stützelement des metallischen Formteils als Verbindungsmittel in entsprechende, parallel zur Welle ausgerichtete, zylindrische Öffnungen an der dem Stützelement zugewandten Seite des Kunststoffformteils eingreifen. Das Kunststoffformteils dient in jedem Falle der Ausfüllung des Innenbereiches des Zahnkranzes und übernimmt zumindest teilweise die Funktion eines herkömmlichen Radkörpers. Diese Funktion besteht in der Festlegung der Lage des Zahnkranzes bezüglich der das Zahnrad tragenden Achse oder Welle, der Stabilisierung des Zahnkranzes bei Belastung und der Übertragung von Kräften und Momenten im Kraftfluss innerhalb einer das Zahnrad umfassenden Getriebeanordnung. Weiterhin senkt der hohe Kunststoffanteil des erfindungsgemäßen Zahnrades das Gewicht und die Herstellungskosten. Gleichzeitig weist der Zahnkranz des metallischen Formteiles im Bereich der Zahnflanken Eigenschaften massiver Metallzahnräder auf, was sich insbesondere positiv auf Verschleiß und Lebensdauer auswirkt. Des weiteren ist ein derart ausgestaltetes Zahnrad gegenüber kurzzeitigen thermischen Belastungen, die lokal über den Zahnkranz in das Zahnrad eingetragen werden, im Vergleich zu reinen Kunststoffzahnrädern wesentlich unempfindlicher. Derartige thermische Belastungen können beispielsweise in Wischerantrieben mit Schneckengetriebe auftreten, wenn durch eine Blockade des Wischersystems über eine auf der Ankerwelle eines Elektromotors sitzende Schnecke die Wärme des sich aufheizenden Elektromotors in den Zahnkranz eines Stirnrades eingeleitet wird.

In einer weiteren Ausführungsform der Erfindung sind die Bolzen und die Öffnungen in der Weise dimensioniert, dass beim Einstecken eine kraftschlüssige Verbindung zwischen den Bolzen und den Öffnungen zustande kommt. Dadurch können zumindest eine zeitweise Fixierung der beiden Komponenten sowie eine hohe Funktionssicherheit des Zahnrades bewirkt werden. Weiterhin ist vorteilhaft, wenn das metallische Formteil als Stützelement ein Flächenelement senkrecht zur Rotationsachse des Zahnrades aufweist.

Zur Verbesserung der formschlüssigen Verbindung zwischen dem Kunststaffformfeil und dem metallischen Formteil, weist das Kunststoffformteil am Außenrand eine Kegelverzahnung auf, wobei der Zahnkranz des metallischen Formteils auf einer Innenseite eine Kegelverzahnung aufweist, die in Eingriff mit der Kegelverzahnung des Kunststoffformteils steht.

Schließlich ist vorgesehen, dass ein unterer Rand des Zahnkranzes des metallischen Formteils in das Stützelement übergeht, wobei das Stützelement in Form einer ebenen Fläche ausgebildet ist, die sich vom Zahnkranz nach innen in Richtung und senkrecht zu einer Rotationsachse des Zahnrads erstreckt, und wobei im zentralen Bereich der ebenen Fläche eine Öffnung ausgespart ist, deren Durchmesser größer als der Durchmesser der zu befestigenden Welle oder Achse ist.

### Ausführungsbeispiele

### Zeichnung

Es zeigen:
- Fig. 1: eine Draufsicht auf ein metallisches Formteil mit einem Zahnkranz und einem Innenkranz für die Aufnahme einer Abtriebswelle gemäß dem Stand der Technik;
- Fig. 2: eine Seitenansicht des metallischen Formteils aus Fig. 1 im Schnitt;
- Fig. 3: eine Seitenansicht eines Zahnrades mit dem metallischen Formteil aus Fig. 1 und einem Kunststoffformteil;
- Fig. 4: eine Draufsicht auf ein metallisches Formteil mit in den Innenbereich des Zahnkranzes verlaufenden Stützelementen nach dem Stand der Technik;
- Fig. 5: eine Seitenansicht des metallischen Formteils aus Fig. 4;
- Fig. 6: eine Seitenansicht eines Zahnrades mit dem metallischen Formtell aus Fig. 4;

- Fig. 7: eine Draufsicht auf ein erfindungsgemäßes metallisches Formteil mit einem Zahnkranz ohne Innenkranz;
- Fig. 8: eine Seitenansicht des metallischen Formteils aus Fig. 7 mit einem teilweise in den Innenbereich des Zahnkranzes verlaufenden Verbindungselement,
- Fig. 9: eine Abtriebswelle mit einem aufgesetzten erfindungsgemäßen, zahnradförmigen Kunststoffformteil,
- Fig. 10: eine Seitenansicht eines erfindungsgemäßen Zahnrades mit dem metallischen Formteil aus den Figuren 7 und 8 und dem Kunststoffformteil aus Fig. 9,

### Beschreibung der Ausführungsbeispiele

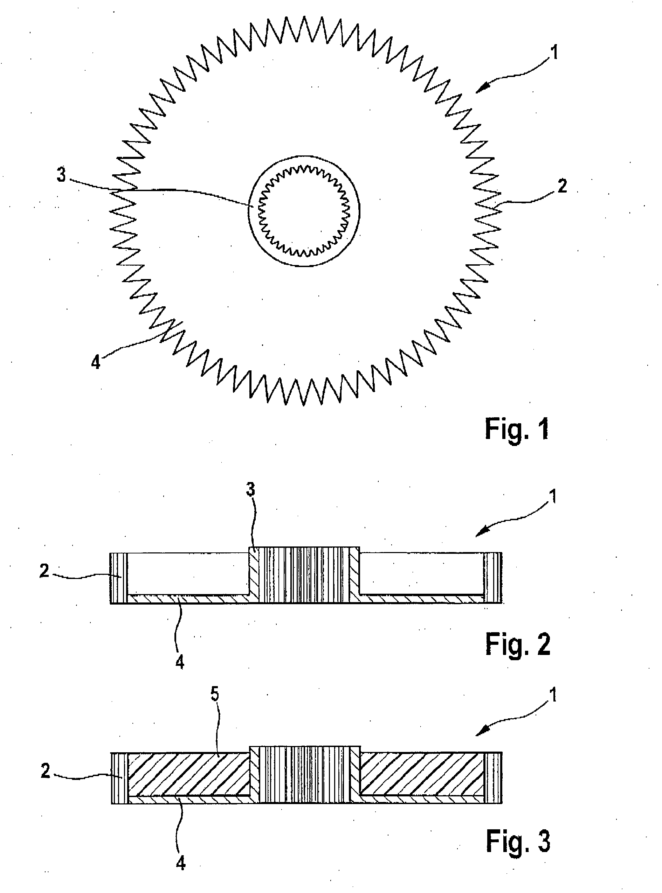

Fig. 1 zeigt eine Draufsicht auf ein metallisches Formteil 1 mit einem Zahnkranz 2 und einem Befestigungsmittel in Form eines Innenkranzes 3 für die Aufnahme einer Abtriebswelle nach dem Stand der Technik. Fig. 2 zeigt den dazugehörigen Schnitt durch das metallische Formteil 1. Das metallische Formteil 1 weist einen umlaufenden Zahnkranz 2 mit Außenverzahnung auf, weicher die formschlüssige Anbindung an weitere Getriebeelemente ermöglicht. Der zentrale Bereich des metallischen Formteils 1 wird von einem Innenkranz 3 in Form einer Steckhülse gebildet, die kraft- und/oder formschlüssig auf eine Abtriebswelle aufgesteckt werden kann. Die Verbindung zwischen dem Innenkranz 3 und dem Zahnkranz 2 wird durch ein Stützelement 4 in Form einer steifen Fläche hergestellt. Das Stützelement 4 bildet in diesem Fall gleichzeitig ein Verbindungselement zwischen dem Befestigungsmittel und dem Zahnkranz 2.

Fig. 3 zeigt eine Seitenansicht eines Zahnrades mit dem metallischen Formteil 1 aus Fig. 1, wobei der Innenbereich des metallischen Formteils 1 mit einer Kunststofffüllung 5 ausgefüllt ist. Im vorliegenden Beispiel erfolgt die Ausfüllung des Innenbereiches des metallischen Formteils 1 durch Vergießen mit einem Kunststoffmaterial, wodurch sich ein Kunststoffformteil mit exakt an das metallische Formteil 1 angepasster Geometrie ausbildet. Alternativ kann die Ausbildung der Kunststofffüllung jedoch auch durch eine vom metallischen Formteil 1 unabhängige Herstellung eines Kunststoffformteiles erfolgen, bevor die Kunststofffüllung 5 und das metallische Formteil 1 miteinander in Verbindung gebracht werden. Die Kunststofffüllung 5 sorgt für eine ausreichende Abstützung des Zahnkranzes 2 bei Belastung des Zahnrades auch bei einer asymmetrischen Ausbildung des Stützelementes 4. Die Kunststofffüllung 5 nimmt auftretende Drucklasten zumindest teilweise auf. Des weiteren reduziert die Kunststofffüllung 5 die Schwingungsneigung und dient somit einer effektiven Geräuschdämpfung.

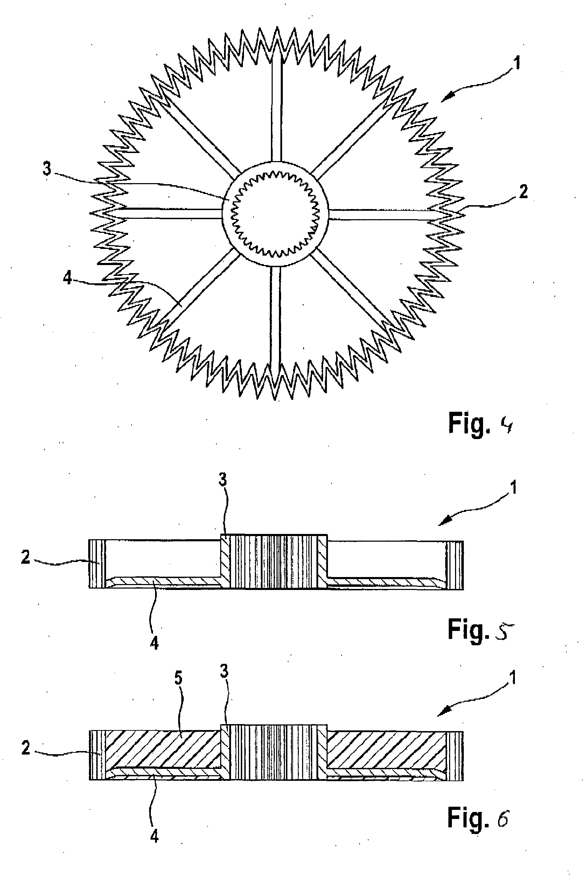

Fig. 4 zeigt eine Draufsicht auf ein metallisches Formteil 1 mit in den Innenbereich des Zahnkranzes 2 verlaufenden Stützelementen 4 nach dem Stand der Technik. Das metallische Formteil 1 weist wiederum einen umlaufenden Zahnkranz 2 auf, und der zentrale Bereich des Zahnkranzes 2 des Formteils 1 wird wiederum von einem Innenkranz 3 in Form einer Steckhülse gebildet, die kraft- und/oder formschlüssig auf eine Abtriebswelle aufgesteckt werden kann. Die Verbindung zwischen dem Zahnkranz 2 und dem Innenkranz 3 erfolgt jedoch durch mehrere Stützelemente 4, die als sternförmig vom Innenkranz 3 zum Zahnkranz 2 verlaufende Streben ausgeführt sind.

Die Figuren 5 und 6 zeigen jeweils eine seitliche Schnittdarstellung des metallischen Formteiles 1 aus Fig. 4, wobei das metallische Formteil 1 in Fig. 6 bereits mit einer Kunststofffüllung 5 zu einem Zahnrad komplettiert ist. In der Seitenansicht sichtbar ist eine abgeknickte Ausführung der Stützelemente 4. Die Anbindung des Zahnkranzes 2 an die Stützelemente 4 erfolgt wiederum asymmetrisch im unteren Randbereich des Zahnkranzes 2. Die Anbindung der Stützelemente 4 an den Innenkranz 3 erfolgt in einem zentraleren Bereich, jedoch ebenfalls leicht asymmetrisch. Die Kunststofffüllung 5 füllt das komplette restliche Volumen innerhalb des Zahnkranzes 2 aus. Durch die abgeknickte Ausführung der Stützelemente 4 und deren Anbindung in einem relativ zentralen Bereich des Innenkranzes 2 ergibt sich eine nahezu vollständige Einbettung der Stützelemente 4 In die Kunststofffüllung 5, was durch Einbettung des metallischen Formteils 1 in einen gießfähigen Kunststoff realisiert wird.

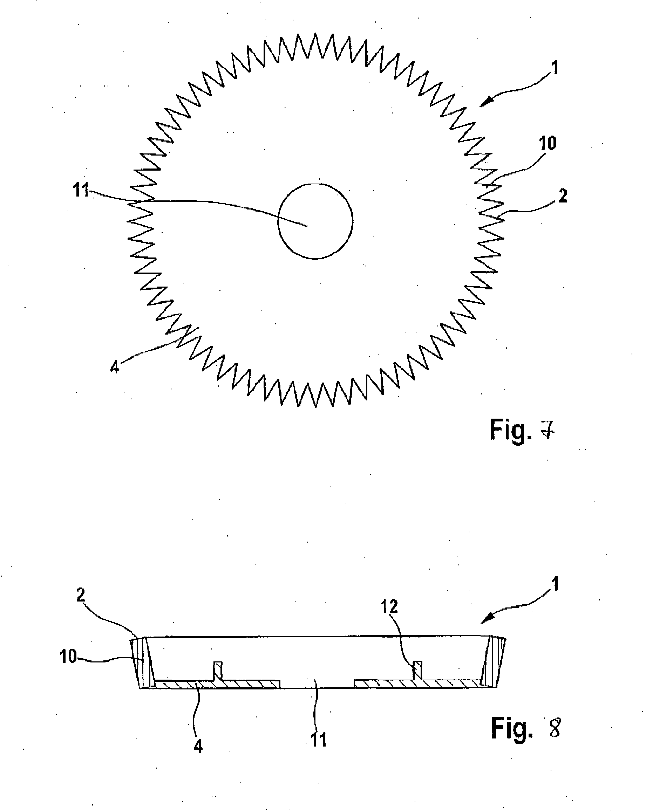

Fig. 7 zeigt eine Draufsicht auf ein erfindungsgemäßes metallisches Formteil 1 mit einem Zahnkranz 2 ohne Innenkranz. Der Zahnkranz 2 weist sowohl an seiner Außenseite als auch an seiner Innenseite eine Kegelverzahnung 10 auf. Der untere Rand des Zahnkranzes geht in ein Stützelement 4 in Form einer ebenen Fläche über, die sich vom Zahnkranz 2 nach innen in Richtung und senkrecht zur Rotationsachse des Zahnrades erstreckt, wobei im zentralen Bereich der ebenen Fläche eine kreisförmige Öffnung 11 ausgespart ist, deren Durchmesser deutlich größer als der Durchmesser der zur Befestigung des Zahnrades vorgesehenen Abtriebswelle ist.

Fig. 8 zeigt eine Seitenansicht des erfindungsgemäßen, metallischen Formteils 1 aus Fig. 7. Gut sichtbar ist wiederum das teilweise in den Innenbereich des Zahnkranzes verlaufende Stützelement 4 in Form einer ebenen Fläche. Auf dieser ebenen Fläche sind Verbindungsmittel in Form fester Bolzen 12 angeordnet.

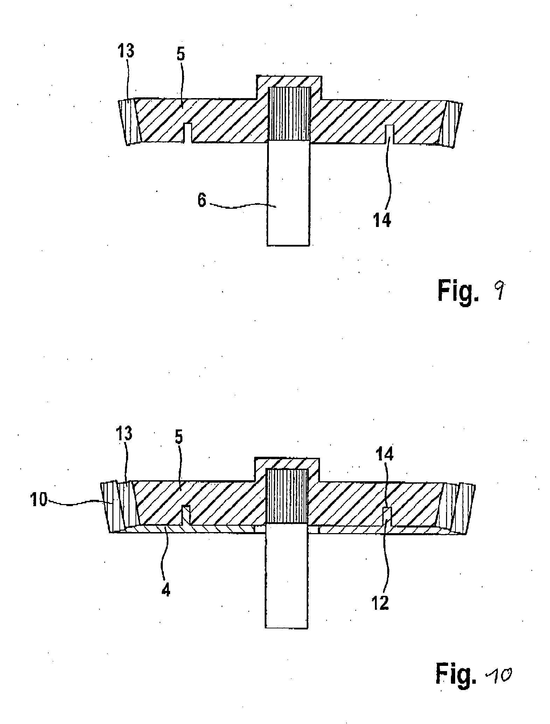

Fig. 9 zeigt eine Abtriebswelle 6 mit einem aufgesetzten zahnradförmigen Kunststoffformteil 5 in seitlicher Schnittdarstellung, welches bei einem fertigen Zahnrad die erfindungsgemäße Kunststofffüllung bildet. Dieses Kunststoffformteil 5 weist an seinem äußeren Rand eine Kegelverzahnung 13 auf, die formschlüssig in die Kegelverzahnung 10 auf der Innenseite des Zahnkranzes 2 des metallischen Formteiles 1 gemäß Fig.9 und 10 eingreifen kann. Der zentrale Bereich des Kunststoffformteils 5 befindet sich in festem Kontakt mit dem Ende einer Abtriebswelle 6. Das Kunststoffformtell 5 weist an seiner Unterseite zylindrische Öffnungen 14 auf, in die die als Verbindungsmittel wirkenden Bolzen 12 eines entsprechenden metallischen Formteils 1 eingreifen können.

Fig. 10 zeigt eine Seitenansicht eines erfindungsgemäßen Zahnrades, welches aus einem metallischen Formteil 1 gemäß der Figuren 7 und 8 und einem Kunststoffformteil 5 gemäß Fig. 9 zusammengesetzt ist. Die Kegelverzahnung 13 am Außenrand des Kunststoffformteiles 5 befindet sich mit der Kegelverzahnung 10 auf der Innenseite des Zahnkranzes 2 des metallischen Formteiles 1 in Eingriff. Die festen Bolzen 12 auf dem Stützelement 4 des metallischen Formteils 1 sind in die korrespondierenden zylindrischen Öffnungen 14 an der Unterseite des Kunststoffformteiles 5 eingeführt. Dadurch wird eine formschlüssige Verbindung zwischen den beiden Komponenten 1 und 5 bewirkt.

Das flächige Stützelement 4 des metallischen Formteiles 1 befindet sich in flächigem Kontakt mit der Unterseite des Kunststoffformteiles 5. Eine derartige Ausgestaltung sorgt beim Zusammensetzen der beiden Komponenten 1, 5 zum erfindungsgemäßen Zahnrad für einen sicheren Anschlag, was insbesondere bei einer von einander unabhängigen Vorfertigung der Kunststofffüllung 5 als Kunststoffformteil und des metallischen Formteiles 1 eine Endmontage wesentlich erleichtert. Die festen Bolzen 12 und die korrespondierenden zylindrischen Öffnungen 14 sind so dimensioniert, dass beim Einstecken zusätzlich eine kraftschlüssige Verbindung zwischen den beiden Komponenten 1, 5 zustande kommt. Dadurch kann zumindest eine zeitweise Fixierung der beiden Komponenten 1, 5 bewirkt werden. Vorteilhafterweise wird diese kraftschlüssige Verbindung durch weitere Verbindungstechniken, beispielsweise durch Kleben, ergänzt, wodurch sich eine sichere Verbindung der beiden Formteile 1, 5 als Komponenten des erfindungsgemäßen Zahnrades und eine hohe Funktionssicherheit des Zahnrades erzielen lässt.

## Patentansprüche

1. Zweikomponentiges Zahnrad, umfassend ein metallisches Formteil (1) bestehend aus einem Zahnkranz (2) mit Außenverzahnung und mindestens einem Stützelement (4), welches auf der Innenseite des Zahnkranzes (2) mit dem Zahnkranz (2) verbunden Ist, und eine Kunststofffüllung (5), welche sich mit der Innenseite des Zahnkranzes (2) zumindest teilweise in flächigem Kontakt befindet, **dadurch gekennzeichnet, dass** die Kunststofffüllung (5) ein Kunststoffformteil (5) ist, das in von einer das Zahnrad aufnehmenden Welle (6) oder Achse beabstandeten Bereichen mit dem metallischen Formteil (1) derart verbunden ist, dass Bolzen (12) auf dem Stützelement (4) des metallischen Formteils (1) als Verbindungsmittel in entsprechende, parallel zur Welle (6) ausgerichtete, zylindrische Öffnungen (14) an der dem Stützelement (4) zugewandten Seite des Kunststofflormteils (5) eingreifen.

2. Zahnrad nach Anspruch 1, **dadurch gekennzeichnet, dass** die Bolzen (12) und die Öffnungen (14) in der Weise dimensioniert sind, dass beim Einstecken eine kraftschlüssige Verbindung zwischen den Bolzen (12) und den Öffnungen (14) zustande kommt.

3. Zahnrad nach einem der vorhergehenden Ansprüche, **dadurch gekennzeichnet, dass** das metallische Formteil (1) als Stützelement (4) ein Flächenelement senkrecht zur Rotationsachse des Zahnrades aufweist.

4. Zahnrad nach einem der vorhergehenden Ansprüche, **dadurch gekennzeichnet, dass** das Kunststoffformteil (5) einen zentralen Bereich aufweist, der sich in festem Kontakt mit einem Ende der Welle (6) oder Achse befindet.

5. Zahnrad nach einem der vorhergehenden Ansprüche, **dadurch gekennzeichnet, dass** das Kunststoffformteil (5) am Außenrand eine Kegelverzahnung aufweist, wobei der Zahnkranz (2) auf einer Innenseite eine Kegelverzahnung aufweist, die in Eingriff mit der Kegelverzahnung des Kunststoffformteils (5) steht.

6. Zahnrad nach einem der vorhergehenden Ansprüche, **dadurch gekennzeichnet, dass** ein unterer Rand des Zahnkranzes (2) in das Stützelement (4) übergeht, wobei das Stützelement (4) in Form einer ebenen Fläche ausgebildet ist, die sich vom Zahnkranz (2) nach innen in Richtung und senkrecht zu einer Rotationsachse des Zahnrads erstreckt, wobei im zentralen Bereich der ebenen Fläche eine Öffnung (11) ausgespart ist, deren Durchmesser größer als der Durchmesser der zu befestigenden Welle (6) oder Achse ist.

## Claims

1. Two-component gearwheel, comprising a metallic shaped part (1) consisting of a toothed rim (2) with external toothing and at least one supporting element (4) which is connected to the toothed rim (2) on the inner side of the toothed rim (2), and a plastic filling (5) which is in planar contact at least partially with the inner side of the toothed rim (2), **characterized in that** the plastic filling (5) is a plastic shaped part (5) which is connected to the metallic shaped part (1) in regions which are spaced apart from a shaft (6) or axle which receives the gearwheel, in such a way that pins (12) on the supporting element (4) of the metallic shaped part (1) engage as connecting means into corresponding, cylindrical openings (14), which are oriented parallel to the shaft (6), on that side of the plastic shaped part (5) which faces the supporting element (4).

2. Gearwheel according to Claim 1, **characterized in that** the pins (12) and the openings (14) are dimensioned such that a non-positive connection between the pins (12) and the openings (14) occurs during the plugging-in operation.

3. Gearwheel according to one of the preceding claims, **characterized in that** the metallic shaped part (1) has, as supporting element (4), a surface element perpendicularly with respect to the rotational axis of the gearwheel.

4. Gearwheel according to one of the preceding claims, **characterized in that** the plastic shaped part (5) has a central region which is in fixed contact with one end of the shaft (6) or axle.

5. Gearwheel according to one of the preceding claims, **characterized in that** the plastic shaped part (5) has a bevel toothing system at the outer edge, the toothed rim (2) having a bevel toothing system on an inner side, which bevel toothing system is in engagement with the bevel toothing system of the plastic shaped part (5).

6. Gearwheel according to one of the preceding claims, **characterized in that** a lower edge of the toothed rim (2) merges into the supporting element (4), the supporting element (4) being configured in the form of a planar surface which extends from the toothed rim (2) inwards in the direction of and perpendicularly with respect to a rotational axis of the gearwheel, an opening (11) being cut out in the central region of the planar surface, the diameter of which opening (11) is greater than the diameter of the shaft (6) or axle to be fastened.

## Revendications

1. Roue dentée à deux composants, comprenant une pièce moulée métallique (1) constituée d'une couronne dentée (2) avec une denture extérieure et au moins un élément de support (4) qui est connecté à la couronne dentée (2) du côté intérieur de la couronne dentée (2), et une charge de remplissage en plastique (5) qui se trouve au moins partiellement en contact superficiel avec le côté intérieur de la couronne dentée (2), **caractérisée en ce que** la charge de remplissage en plastique (5) est une pièce moulée en plastique (5) qui est connectée dans des régions espacées d'un arbre (6) ou d'un axe recevant la roue dentée à la pièce moulée métallique (1) de telle sorte que des boulons (12) sur l'élément de support (4) de la pièce moulée métallique (1) viennent en prise en tant que moyens de liaison du côté de la pièce moulée en plastique (5) tourné vers l'élément de support (4) dans des ouvertures cylindriques (14) correspondantes, orientées parallèlement à l'arbre (6).

2. Roue dentée selon la revendication 1, **caractérisée en ce que** les boulons (12) et les ouvertures (14) sont dimensionnés de telle sorte que lors de l'enfoncement, il se produise une connexion par engagement par force entre les boulons (12) et les ouvertures (14).

3. Roue dentée selon l'une quelconque des revendications précédentes, **caractérisée en ce que** la pièce moulée métallique (1) présente en tant qu'élément de support (4) un élément de surface perpendiculairement à l'axe de rotation de la roue dentée.

4. Roue dentée selon l'une quelconque des revendications précédentes, **caractérisée en ce que** la pièce moulée en plastique (5) présente une région centrale qui est en contact fixe avec une extrémité de l'arbre (6) ou de l'axe.

5. Roue dentée selon l'une quelconque des revendications précédentes, **caractérisée en ce que** la pièce moulée en plastique (5) présente, au niveau du bord extérieur, une denture conique, la couronne dentée (2) présentant sur un côté intérieur une denture conique qui est en prise avec la denture conique de la pièce moulée en plastique (5).

6. Roue dentée selon l'une quelconque des revendications précédentes, **caractérisée en ce qu'**un bord inférieur de la couronne dentée (2) se prolonge par l'élément de support (4), l'élément de support (4) étant réalisé sous forme de surface plane qui s'étend depuis la couronne dentée (2) vers l'intérieur dans la direction de la roue dentée et perpendiculairement à un axe de rotation de la roue dentée, une ouverture (11) étant évidée dans la région centrale de la surface plane, dont le diamètre est supérieur au diamètre de l'arbre (6) ou de l'axe à fixer.
